# EUROPEAN PATENT SPECIFICATION

(11) **EP 4 075 923 B1**
(45) Date of publication and mention of the grant of the patent: **03.06.2026**
(21) Application number: 21168059.0
(22) Date of filing: 13.04.2021
(51) Int. Cl.: H05B 47/19, H04W 4/80, H04L 12/28, H05B 47/10, H05B 47/175

(54) **METHOD, ARRANGEMENT, AND COMPUTER PROGRAM PRODUCT FOR WIRELESS CONTROL OF LIGHTING**
VERFAHREN, ANORDNUNG UND COMPUTERPROGRAMMPRODUKT ZUR DRAHTLOSEN BELEUCHTUNGSSTEUERUNG
PROCÉDÉ, DISPOSITIF ET PRODUIT PROGRAMME INFORMATIQUE POUR LA COMMANDE SANS FIL DE L'ÉCLAIRAGE

(43) Date of publication of application: 19.10.2022
(73) Proprietor: Helvar Oy Ab, 02150 Espoo (FI)
(72) Inventor: Ibrahim, Abdulla, 02150 Espoo (FI)
(74) Representative: Papula Oy

(56) References cited:
- WO-A1-2020/001998
- US-A1- 2015 015 165
- US-A1- 2017 171 949
- US-A1- 2018 235 059

## Description

### FIELD OF THE INVENTION

The invention is generally related to wireless control of appliances, such as lighting. In particular, the invention is related to using a portable electronic device to control appliances in place of a fixedly installed control panel.

### BACKGROUND OF THE INVENTION

By far the most common way to provide means for controlling the luminaires of an indoor space, such as a room, meeting room, hotel room, hall, auditorium, open office, corridor, or the like, is to place a fixedly installed, wired switch to a suitable location on a wall, typically close to a doorpost. In place of a simple switch a control panel can be used, in which there may be mechanically operable buttons and/or areas responsive to touch on a touch-sensitive screen. In addition to lighting, similar controlling needs apply concerning many other kinds of common appliances. Examples include but are not limited to ventilation, heating, audiovisual presentation devices, and intruder detection systems.

In many cases users would prefer not having to utilize the conventional switch or control panel. Many users dislike touching something that someone else has touched recently, for hygienic reasons. Having to stand up and walk to the fixed location of the control panel for each control action may feel burdensome, in particular if the user wants to set the lighting or other desired functionality exactly right for each situation. It would be more convenient if each user could perform the control actions from any preferred location in the illuminated space.

A patent EP3096304 describes a solution in which the user can "copy" the appearance and functionality of a fixedly installed control panel to a smartphone or some other portable electronic device equipped with a touch-sensitive display. The solution is based on continued wireless communications between the control panel and the portable electronic device. When the user operates the portable device to give a command, the portable device transmits information indicative of the command wirelessly to the control panel. The last-mentioned converts the command to a standardized form accepted internally in the lighting control system and forwards the converted command to appropriate luminaires for example through a DALI bus. While such a solution provides a reasonable level of functionality in some cases, it involves problems related to e.g. the required range and quality of the wireless communications connection between the portable device and the control panel.

A prior art document US 2015/015165 A1 discloses a method and an apparatus for configuring a physical control panel. A mobile device may detect at least one property thereof and identify a plurality of events that can be generated. The mobile device associates control actions with the events and transmits such associations to a controller.

Another prior art document US 2017/0171949 A1 discloses a lighting system where lighting devices include a controller communicating through NFC. Identification information for lighting devices is collected through NFC communications. Generated settings data for controlling lighting is transmitted to the respective lighting devices.

Another prior art document WO 2020/001998 A1 discloses the use of a configuration device to make a lighting device store a new association between a light setting and a lighting control command upon receiving a configuration command from the configuration device.

Another prior art document US 2018/0235059 Al discloses the use of a remote control device to transmit a lighting control command to a luminaire, using the identifier of a terminal device as the source address of the command.

### SUMMARY

It is an objective to present a method, arrangement, and computer program product for enabling users to control lighting effortlessly in environments where luminaires are capable of wireless communications. Another objective is that this can be done with little or no complicated changes to existing luminaires and other parts of the lighting system.

These and other advantageous objectives are achieved with an approach where the mobile devices of users may acquire sufficient information to send direct lighting instructions wirelessly to luminaires to implement the same actions that the luminaires would perform when their fixed lighting control device was operated.

According to a first aspect there is provided a method for wireless control of lighting. The method comprises wirelessly receiving a pre-programmed identifier pertinent to a fixed lighting control device into a mobile device, and wirelessly identifying at least one luminaire to which said pre-programmed identifier is also pertinent. The method comprises also wirelessly receiving into said mobile device one or more indications of respective pre-programmed functions of said at least one luminaire. The pre-programmed functions are defined as responses of the luminaire to respective control commands from said fixed lighting control device. The method comprises sending from said mobile device an instruction for said at least one luminaire to perform a selected one of said pre-programmed functions. Said instruction is a luminaire-specific instruction to change the light emitted by the particular luminaire by an amount that the mobile device found out through said receiving of said one or more indications.

According to an embodiment, the method comprises displaying, on a touch-sensitive screen of the mobile device, an image of said fixed lighting control device, and sending said instruction as a response to a perceived user operation of a part of said image. This involves the advantage that various kinds of mobile devices can very flexibly adapt their operation for very intuitive use of different kinds of lighting systems.

According to an embodiment, said displaying is done based on pre-programmed knowledge of the mobile device concerning one or more visual features of said fixed lighting control device. This involves the advantage that relatively little information about the visual appearance of the control panel needs to be conveyed between the control panel and the mobile device.

According to an embodiment, the method comprises receiving, in association with said identifier pertinent to the fixed lighting control device, information indicative of one or more visual features of said fixed lighting control device. In such case said displaying may be done at least partly based on said received information. This involves the advantage that the mobile device may mimic the original appearance of the control panel in displaying its image to the user, even without having to know all its features beforehand.

According to an embodiment, wireless communications for said receiving of a pre-programmed identifier pertinent to the fixed lighting control device are established as a response to a distance between said mobile device and said fixed lighting control device becoming short enough to trigger near-field communications, and/or the mobile device optically reading a visual identifier of the fixed lighting control device, and/or a user of the mobile device activating an application. This involves the advantage that the designer of the system has good control over what will happen at each phase of executing the method.

According to an embodiment, said wireless identifying of at least one luminaire to which said pre-programmed identifier is also pertinent is performed by receiving advert transmissions made spontaneously by such at least one luminaire. This involves the advantage that a very useful piece of information may be brought into the attention of the mobile device without having to change the way in which many wirelessly communicating luminaires operate anyway.

According to an embodiment, said wireless receiving into said mobile device of one or more indications of respective pre-programmed functions of said at least one luminaire comes after wirelessly interrogating said at least one luminaire of its pre-programmed functions. This involves the advantage that the mobile device has good control over how this phase of executing the method proceeds.

According to a second aspect there is provided an arrangement for wireless control of lighting. The arrangement comprises a mobile electronic device configured to perform a method of a kind described above.

According to a third aspect there is provided a computer program product comprising one or more sets of one or more machine-readable instructions that, when executed on one or more processors, are configured to cause the execution of a method of a kind described above.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a lighting system in a room,
**figure 2** illustrates a fixed lighting control device,
**figure 3** illustrates known commissioning of a wirelessly controlled lighting system,
**figure 4** illustrates known transmission of control commands in a wirelessly controlled lighting system,
**figure 5** illustrates communications between a mobile device and a fixed lighting control device,
**figure 6** illustrates communications between the mobile device and a number of luminaires, and
**figure 7** illustrates the transmission of instructions according to an embodiment.

### DETAILED DESCRIPTION

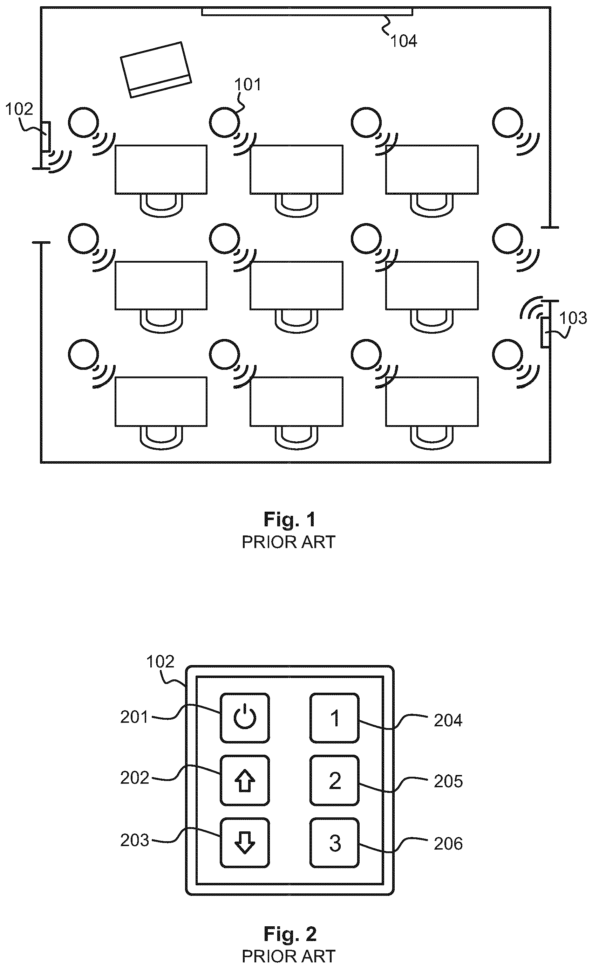

Fig. 1 is a schematic floor plan of a room equipped with a wirelessly controlled lighting system. There are 12 luminaires in the room, marked with circles in fig. 1, with luminaire 101 shown as an example. There are two fixed lighting control devices 102 and 103, each installed close to a respective doorpost. The fixed lighting control devices 102 and 103 may be called control panels for short. Each of the luminaires and control panels is capable of wireless communications. Their respective ranges of communication may be long enough so that any wireless transmission made by any of them can be received with reasonable reliability by all the others. Additionally or alternatively, mesh technology can be employed so that the range of communication of each device is relatively short but each transmission becomes relayed further according to a predetermined transmission protocol.

Fig. 2 illustrates an example of a control panel 102. A control panel may comprise various, dedicated user-operable means such as keys or buttons, and/or it may comprise a touch-sensitive screen where some kind of displayed icons mark touch-sensitive areas that serve the same purpose. Examples of user-operable means include but are not limited to immediate action buttons such as an on/off button 201, dim up button 202, and dim down button 203, as well as scene buttons. The exemplary control panel of fig. 2 comprises three scene buttons 204, 205, and 206. A scene button is one that may trigger some programmable action of the controlled luminaires. For example, a presentation scene may have been defined in the room of fig. 1, in which the luminaires closest to the whiteboard 104 light up to 100% while all other luminaires dim down to, say, 10% of the maximum brightness. If such a presentation scene has been defined as scene 1, pressing the correspondingly numbered scene button 204 makes the luminaires assume said pre-programmed brightness values. A scene may also involve other aspects than brightness, such as colour or colour temperature for example.

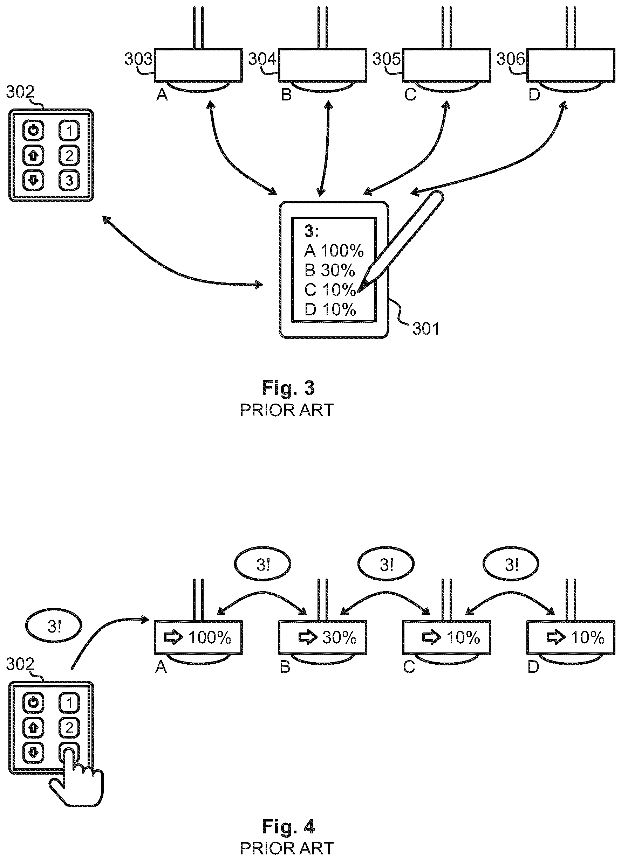

Figs. 3 and 4 illustrate in more detail an example of communications in a lighting system. Fig. 3 illustrates a commissioning phase, in which a technician or sufficiently skilled user operates a commissioning device 301 to perform the required programming. The programming involves temporarily setting up wireless communication connections between the commissioning device 301 and each device of the lighting system that is to be programmed. The person responsible for the commissioning defines the programmed features and functions using the commissioning device 301, which transmits the appropriate instructions to the control panel 302 and the luminaires 303 to 306 through said temporary wireless communication connections.

In order to ensure correct operation, it is advantageous to program the control panel 302 and the luminaires 303 to 306 so that there is a common group identifier pertinent to them all. In the simplest case, all luminaires 303 to 306 belong to the same group, so one group identifier is sufficient. As an example, the luminaires and control panel of one room may form one group identified by a first group identifier, while the luminaires and control panel in the adjacent room form another group identified by a second group identifier. This ensures that each control panel only controls the luminaires of the appropriate room. More versatile grouping can be employed, using a corresponding number of distinct group identifiers.

In the example of fig. 3, the commissioning comprises pre-programming a scene 3 so that it involves the leftmost luminaire (luminaire A, reference number 303) going to 100% brightness, the next luminaire (luminaire B, reference number 304) going to 30% brightness, and the two other luminaires (luminaires C and D, reference designators 305 and 306) going to 10% brightness. An important detail here is that the setting pertinent to the programmed scene becomes stored in the respective luminaire, not (at least not necessarily) in the control panel 302. Thus, after the commissioning phase, the control panel 302 only knows that there is a scene 3 (because it comprises a button for it). The fact that scene 3 involves the leftmost luminaire 303 going to 100% is stored in the luminaire 303 itself.

Storing something in a luminaire must be understood in a wide sense, so that it means storing such information at a location where it is readily available for employing in the luminaire. As an example, arrangements exist where the entity that is here called a luminaire comprises the luminaire proper, a sensor unit, and an intelligent control unit that may be physically located in the sensor unit, in the luminaire, or somewhere in the vicinity. In such a case the intelligent control unit typically contains the memory in which settings and other information can be stored.

Fig. 4 shows how during use there may come a situation where a user presses button 3 in the control panel 302. The control panel 302 makes a wireless transmission, the essential information content of which is that button 3 was pressed. As mentioned earlier, this transmission may be powerful enough to be received with reasonable reliability by all luminaires that belong to the group controlled by the control panel. Additionally or alternatively, the luminaires may forward the information content of the transmission by repeatedly relaying it, in conformity with the principle of mesh communications. As soon as each luminaire receives the information that button 3 was pressed, they perform the appropriate action that was pre-programmed for them in the commissioning phase.

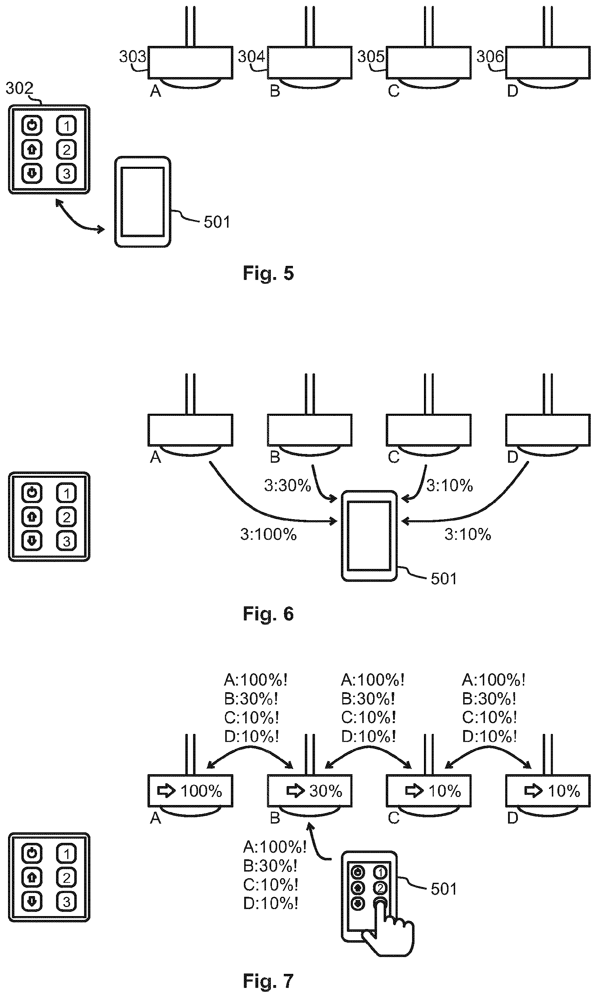

Figs. 5 to 7 show how a mobile device 501 can be utilised for wireless control of lighting in a system generally resembling that of figs. 3 and 4. Fig. 5 illustrates the method step of wirelessly receiving, into the mobile device 501, a pre-programmed identifier pertinent to the fixed lighting control device (control panel) 302. A corresponding pre-programmed identifier has been introduced by the name group identifier above. The purpose of this step is to enable the mobile device 501 to recognize, which luminaires have been made controllable through the control panel 302. One relatively straightforward way to provide the mobile device 501 with such capability is to make the control panel 302 communicate a corresponding group identifier to the mobile device 501.

The wireless communications between the mobile device 501 and the control panel 302 for executing said method step may be established as a response to a variety of triggering actions. As one example, the triggering action may be simply the distance between the mobile device 501 and the control panel 302 becoming short enough to trigger near-field communications. As another example, the triggering action may involve the mobile device optically reading a visual identifier, such as a QR code for example, of the control panel. As a further example, the user of the mobile device may activate an application that sets up the wireless communications. As yet another example, the user may utilize some operable means of the control panel, such as a specific button or combination of buttons, to activate the wireless communications. These examples are not mutually exclusive, but the activating of the wireless communications may involve two or more of them.

Fig. 6 illustrates two further method steps. Using its wireless communications capability, the mobile device 501 identifies one or more luminaires to which pertains the same pre-programmed identifiers as the one the mobile device 501 received from the control panel 302 in fig. 5. Additionally, the mobile device 501 receives one or more indications of respective pre-programmed functions of such identified luminaires. These pre-programmed functions are those that were defined, in the commissioning phase, as responses of the luminaire to respective control commands from the control panel 302.

In this simplified example, in fig. 6 the mobile device 501 learns that there are luminaires A, B, C, and D in the group controlled by the control panel 302. The mobile device 501 may obtain this information for example by receiving advert transmissions that the luminaires make spontaneously, as defined in a pre-programmed communications protocol such as the BLE mesh protocol. The acronym BLE comes from Bluetooth Low Energy.

After identifying a luminaire that belongs to the appropriate group, the mobile device 501 continues communicating with such a luminaire, using its wireless communications capability, to interrogate the luminaire of its pre-programmed functions. As was pointed out above, these were stored in the luminaire at the commissioning phase. In fig. 6 the mobile device 501 learns, by interrogating luminaire A, that there is a pre-programmed function defined as a response of luminaire A to a control command "button 3 pressed" from the control panel 302, and that said pre-programmed function involves going to 100% brightness. Similarly, by interrogating luminaires B, C, and D each in turn, the mobile device 501 learns in fig. 6 that the corresponding, pre-programmed responses of luminaires B, C, and D to the same control command from the control panel 302 is to go to 30%, 10%, and 10% brightness respectively.

Fig. 7 illustrates a method step of sending, from the mobile device 501, an instruction of each appropriate luminaire to perform the corresponding, selected pre-programmed function. As shown in fig. 7, this action is triggered by the user of the mobile device 501 pressing an image of button 3 on the touch-sensitive display of the mobile device 501.

Similar to the control commands transmitted by the control panel 302, the instruction transmissions made by the mobile device in fig. 7 may be powerful enough to reach each luminaire of the group, and/or they may be relayed further between luminaires according to the principle of mesh communications.

As an important difference to fig. 4, the mobile device 501 does not transmit a simple control command "button 3 pressed" like the control panel 302 would if the user pressed the corresponding button there. Instead, the instructions transmitted by the mobile device in fig. 7 are luminaire-specific instructions to change the light emitted by the particular luminaire by an amount that the mobile device 501 found out earlier, at the step of interrogating the luminaires and receiving the indications. In other words, when the user presses the (image of the) button 3 on the mobile device, the mobile device addresses luminaire A with an instruction to go to 100% brightness, luminaire B with an instruction to go to 30% brightness and so on.

There are several advantages in such a difference. The first of them concerns encryption. Typically, when the control panel 302 makes a transmission like "button 3 pressed" (as in fig. 4) it sends this message in encrypted form. If the mobile device 501 would be to merely mimic such a transmission, it should acquire the proper encryption key from the control panel. This might eventually lead to the encryption keys of the lighting system becoming widely known to a large number of mobile devices, which undermines the advantages of using encryption in the first place. Another advantage is that the (user of the) mobile device becomes capable of tailoring the scenes according to their own preferences. If, for example, the user works at a dedicated desk in the illuminated room and a scene as originally pre-programmed has a suboptimal illumination level at that desk, the user may utilize fine-tuning features of the application on their mobile device so that whenever they activate that scene from their desk (rather than from the control panel), the illumination level becomes more suitable.

Depending on the communications protocol employed, the mobile device may send the instructions in a single message, from which each luminaire then extracts the part pertinent to it, or as a set of individually addressed messages.

As indicated in fig. 7, the method may comprise utilizing the touch-sensitive screen of the mobile device 501 to display an image of the control panel 302. This way it becomes very intuitive for the user to control the lighting system: the user interface looks the same irrespective of whether the control panel or the mobile device is used. In fig. 7 the mobile device 501 sends the instructions to the luminaires as a response to a perceived user operation of a part of the displayed image (user presses the image of button 3).

The capability of the mobile device 501 to display an image of the control panel may be based on pre-programmed knowledge of the mobile device concerning one or more visual features of the control panel. As an example, all control panels operable in the way explained above may have a standardized outer appearance, in which case it is sufficient that such a standardized outer appearance has been programmed to the mobile device as a part of the application that is responsible also for the other explained functionalities.

Additionally or alternatively, the method may comprise making the mobile device receive, from the control panel itself, information indicative of one or more visual features of the control panel. This could be done in association with receiving the group identifier (or, more generally: the identifier pertinent to the control panel). In such a case, displaying the image of the control panel on the touch-sensitive screen of the mobile device may be done at least partly based on such received information. The received information may involve e.g. a specific appearance of a non-standard control panel, and/or a colour of (some part of) the control panel.

Additionally or alternatively, the received information may involve an indicator that tells, which one of a small number of possible outer appearances the control panel has. The possible alternatives may all have been programmed to the mobile device as a part of said application, so the mobile device could then just select the correct alternative based on the received indicator.

Additionally or alternatively, the received information may involve an indication of a number of pressable buttons in the control panel, in which case the mobile device may create the displayable image using some standard definitions otherwise and only selecting the number of buttons to be displayed accordingly.

Additionally or alternatively, the received information may involve an indication of the shape (square, round, triangular, etc.) of pressable buttons in the control panel. Also in this case, the mobile device may create the displayable image using some standard definitions otherwise and only selecting the shape of buttons to be displayed accordingly.

The description above has concentrated mostly on method-like features. Concerning embodiments that involve an arrangement, they typically comprise a mobile electronic device configured to perform a method of the kind described above. The mobile electronic device may be for example a smartphone, a tablet computer, a laptop computer, a smartwatch, or some other device that users typically carry along in environments illuminated by lighting systems.

Concerning embodiments that involve a computer program product, they typically comprise one or more sets of one or more machine-readable instructions that, when executed on one or more processors, are configured to cause the execution of a method of the kind described above. Such a computer program product may be available for installing into mobile electronic devices in the form of an application program, often referred to simply as an app.

One advantage of the approach described here is that it only requires very few changes to existing, wirelessly controlled lighting systems. A control panel (or, more generally: a fixedly installed control device) of known kind must only be capable of setting up a communications connection with the mobile device of the user and to use such a connection for exchanging some simple pieces of information, as explained above. Similarly, luminaires of known kind must only be capable of responding to the interrogation of the mobile device by transmitting the indications of their pre-programmed functions. If not already present, such capabilities can be established in control panels and luminaires by augmenting their respective control programs appropriately.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for wireless control of lighting, comprising:
- wirelessly receiving a pre-programmed identifier pertinent to a fixed lighting control device (302) into a mobile device (501),
- wirelessly identifying at least one luminaire (303, 304, 305, 306) to which said pre-programmed identifier is also pertinent,
- wirelessly receiving into said mobile device (501) one or more indications of respective pre-programmed functions of said at least one luminaire (303, 304, 305, 306), said pre-programmed functions being defined as responses of the luminaire (303, 304, 305, 306) to respective control commands from said fixed lighting control device (302), and
- sending from said mobile device (501) an instruction for said at least one luminaire (303, 304, 305, 306) to perform a selected one of said pre-programmed functions;
wherein said instruction is a luminaire-specific instruction to change the light emitted by the particular luminaire (303, 304, 305, 306) to the light output level associated with the selected one of the pre-programmed functions as obtained by said mobile device (501)from said one or more indications.

2. A method according to claim 1, comprising:
- displaying, on a touch-sensitive screen of the mobile device (501), an image of said fixed lighting control device (302), and
- sending said instruction as a response to a perceived user operation of a part of said image.

3. A method according to claim 2, wherein said displaying is done based on pre-programmed knowledge of the mobile device (501) concerning one or more visual features of said fixed lighting control device (302).

4. A method according to claim 2 or 3, comprising:
- receiving, in association with said identifier pertinent to the fixed lighting control device (302), information indicative of one or more visual features of said fixed lighting control device (302);
wherein said displaying is done at least partly based on said received information.

5. A method according to any of the preceding claims, wherein wireless communications for said receiving of a pre-programmed identifier pertinent to the fixed lighting control device (302) are established as a response to at least one of:
- a distance between said mobile device (501) and said fixed lighting control device (302) becoming short enough to trigger near-field communications,
- the mobile device (501) optically reading a visual identifier of the fixed lighting control device (302),
- a user of the mobile device (501) activating an application.

6. A method according to any of the preceding claims, wherein said wireless identifying of at least one luminaire (303, 304, 305, 306) to which said pre-programmed identifier is also pertinent is performed by receiving advert transmissions made spontaneously by such at least one luminaire (303, 304, 305, 306).

7. A method according to any of the preceding claims, wherein said wireless receiving into said mobile device (501) of one or more indications of respective pre-programmed functions of said at least one luminaire (303, 304, 305, 306) comes after wirelessly interrogating said at least one luminaire (303, 304, 305, 306) of its pre-programmed functions.

8. An arrangement for wireless control of lighting, comprising a mobile electronic device (501) configured to perform a method according to any of claims 1 to 7.

9. A computer program product comprising one or more sets of one or more machine-readable instructions that, when executed on one or more processors, are configured to cause the execution of a method according to any of claims 1 to 7.

## Patentansprüche

1. Verfahren zur drahtlosen Beleuchtungssteuerung, umfassend:
- drahtloses Empfangen eines vorprogrammierten Identifikators, der sich auf eine feste Beleuchtungssteuervorrichtung (302) bezieht, in einer mobilen Vorrichtung (501),
- drahtloses Identifizieren wenigstens einer Leuchte (303, 304, 305, 306), auf die sich der vorprogrammierte Identifikator ebenfalls bezieht,
- drahtloses Empfangen, in der mobilen Vorrichtung (501), von einer oder mehr Angaben von jeweiligen vorprogrammierten Funktionen der wenigstens einen Leuchte (303, 304, 305, 306), wobei die vorprogrammierten Funktionen als Antworten der Leuchte (303, 304, 305, 306) auf jeweilige Steuerbefehle von der festen Beleuchtungssteuervorrichtung (302) definiert sind, und
- Senden, von der mobilen Vorrichtung (501), einer Instruktion für die wenigstens eine Leuchte (303, 304, 305, 306), eine ausgewählte von den vorprogrammierten Funktionen auszuführen;
wobei die Instruktion eine leuchtenspezifische Instruktion zum Ändern des Lichts, das durch die bestimmte Leuchte (303, 304, 305, 306) emittiert wird, auf den Lichtausgangspegel ist, der der ausgewählten von den vorprogrammierten Funktionen zugeordnet ist, die durch die mobile Vorrichtung (501) von der einen oder mehr Angaben erhalten wird.

2. Verfahren nach Anspruch 1, umfassend:
- Anzeigen, auf einem berührungsempfindlichen Bildschirm der mobilen Vorrichtung (501), eines Bilds der festen Beleuchtungssteuervorrichtung (302), und
- Senden der Instruktion als eine Antwort auf eine wahrgenommene Benutzerbetätigung eine Teils des Bilds.

3. Verfahren nach Anspruch 2, wobei das Anzeigen basierend auf vorprogrammiertem Wissen der mobilen Vorrichtung (501) betreffend ein oder mehr visuelle Merkmale der festen Beleuchtungssteuervorrichtung (302) erfolgt.

4. Verfahren nach Anspruch 2 oder 3, umfassend:
- Empfangen, in Zuordnung zu dem Identifikator, der sich auf die feste Beleuchtungssteuervorrichtung (302) bezieht, von Informationen, die ein oder mehr visuelle Merkmale der festen Beleuchtungssteuervorrichtung (302) angeben;
wobei das Anzeigen wenigstens teilweise basierend auf den empfangenen Informationen erfolgt.

5. Verfahren nach einem der vorherigen Ansprüche, wobei drahtlose Kommunikationen für das Empfangen eines vorprogrammierten Identifikators, der sich auf die feste Beleuchtungssteuervorrichtung (302) bezieht, in Antwort auf wenigstens eines von Folgenden hergestellt werden:
- ein Abstand zwischen der mobilen Vorrichtung (501) und der festen Beleuchtungssteuervorrichtung (302) wird ausreichend klein, um Nahfeldkommunikationen auszulösen,
- die mobile Vorrichtung (501) liest optisch einen visuellen Identifikator der festen Beleuchtungssteuervorrichtung (302),
- ein Benutzer der mobilen Vorrichtung (501) aktiviert eine Anwendung.

6. Verfahren nach einem der vorherigen Ansprüche, wobei das drahtlose Identifizieren wenigstens einer Leuchte (303, 304, 305, 306), auf die sich der vorprogrammierte Identifikator ebenfalls bezieht, dadurch erfolgt, dass Hinweisübertragungen empfangen werden, die spontan durch eine solche wenigstens eine Leuchte (303, 304, 305, 306) erzeugt werden.

7. Verfahren nach einem der vorherigen Ansprüche, wobei das drahtlose Empfangen, in der mobilen Vorrichtung (501), von einer oder mehr Angaben von jeweiligen vorprogrammierten Funktionen der wenigstens einen Leuchte (303, 304, 305, 306) erfolgt, nachdem die wenigstens eine Leuchte (303, 304, 305, 306) drahtlos nach ihren vorprogrammierten Funktionen befragt wurde.

8. Anordnung zur drahtlosen Beleuchtungssteuerung, umfassend eine mobile elektronische Vorrichtung (501), die dazu konfiguriert ist, ein Verfahren nach einem der Ansprüche 1 bis 7 auszuführen.

9. Computerprogrammprodukt, umfassend einen oder mehr Sätze von einer oder mehr maschinenlesbaren Instruktionen, die bei Ausführung auf einem oder mehr Prozessoren dazu konfiguriert sind, die Durchführung eines Verfahrens nach einem der Ansprüche 1 bis 7 zu bewirken.

## Revendications

1. Procédé pour la commande sans fil de l'éclairage, comprenant :
- recevoir de manière sans fil un identifiant préprogrammé associé à un dispositif fixe de commande d'éclairage (302) dans un dispositif mobile (501),
- identifier de manière sans fil au moins un luminaire (303, 304, 305, 306) auquel ledit identifiant préprogrammé est également associé,
- recevoir de manière sans fil dans ledit dispositif mobile (501) une ou plusieurs indications de fonctions préprogrammées respectives dudit au moins un luminaire (303, 304, 305, 306), lesdites fonctions préprogrammées étant définies comme des réponses du luminaire (303, 304, 305, 306) à des ordres de commande respectifs provenant dudit dispositif fixe de commande d'éclairage (302), et
- envoyer depuis ledit dispositif mobile (501) une instruction pour ledit au moins un luminaire (303, 304, 305, 306) pour mettre en œuvre une fonction préprogrammée sélectionnée parmi lesdites fonctions préprogrammées ;
dans lequel ladite instruction est une instruction spécifique au luminaire pour changer la lumière émise par le luminaire particulier (303, 304, 305, 306) au niveau de flux lumineux associé à la fonction préprogrammée sélectionnée parmi les fonctions préprogrammées tel qu'obtenu par ledit dispositif mobile (501) à partir desdites une ou plusieurs indications.

2. Procédé selon la revendication 1, comprenant :
- afficher, sur un écran tactile du dispositif mobile (501), une image dudit dispositif fixe de commande d'éclairage (302), et
- envoyer ladite instruction en réponse à une opération d'utilisateur perçue d'une partie de ladite image.

3. Procédé selon la revendication 2, dans lequel ledit affichage est réalisé sur la base de connaissances préprogrammées du dispositif mobile (501) concernant une ou plusieurs caractéristiques visuelles dudit dispositif fixe de commande d'éclairage (302).

4. Procédé selon la revendication 2 ou la revendication 3, comprenant :
- recevoir, en association avec ledit identifiant associé au dispositif fixe de commande d'éclairage (302), des informations indicatives d'une ou plusieurs caractéristiques visuelles dudit dispositif fixe de commande d'éclairage (302) ;
dans lequel ledit affichage est réalisé au moins en partie sur la base desdites informations reçues.

5. Procédé selon l'une quelconque des revendications précédentes, dans lequel des communications sans fil pour ladite réception d'un identifiant préprogrammé associé au dispositif fixe de commande d'éclairage (302) sont établies en réponse à au moins l'un des éléments suivants :
- une distance entre ledit dispositif mobile (501) et ledit dispositif fixe de commande d'éclairage (302) devenant suffisamment courte pour déclencher des communications en champ proche,
- le dispositif mobile (501) effectuant une lecture optique d'un identifiant visuel du dispositif fixe de commande d'éclairage (302),
- un utilisateur du dispositif mobile (501) activant une application.

6. Procédé selon l'une quelconque des revendications précédentes, dans lequel ladite identification de manière sans fil d'au moins un luminaire (303, 304, 305, 306) auquel ledit identifiant préprogrammé est également associé est mise en œuvre en recevant des transmissions de signalisation émises spontanément par un tel au moins un luminaire (303, 304, 305, 306).

7. Procédé selon l'une quelconque des revendications précédentes, dans lequel ladite réception de manière sans fil dans ledit dispositif mobile (501) d'une ou plusieurs indications de fonctions préprogrammées respectives dudit au moins un luminaire (303, 304, 305, 306) intervient après avoir interrogé de manière sans fil ledit au moins un luminaire (303, 304, 305, 306) au sujet de ses fonctions préprogrammées.

8. Agencement pour la commande sans fil de l'éclairage, comprenant un dispositif électronique mobile (501) configuré pour mettre en œuvre un procédé selon l'une quelconque des revendications 1 à 7.

9. Produit programme informatique comprenant un ou plusieurs ensembles d'une ou plusieurs instructions lisibles par machine qui, lorsqu'elles sont exécutées sur un ou plusieurs processeurs, sont configurées pour amener l'exécution d'un procédé selon l'une quelconque des revendications 1 à 7.
